# EUROPEAN PATENT APPLICATION

(11) **EP 2 662 786 A2**
(43) Date of publication of application: **13.11.2013**
(21) Application number: 13160639.4
(22) Date of filing: 22.03.2013
(51) Int. Cl.: G06F 17/30

(54) **Electronic device with multimedia content function**

(30) Priority: 08.05.2012 US 201213466313
(71) Applicant: Sony Mobile Communications AB, 221 88 Lund (SE)
(72) Inventor: Wassingbo, Tomas, 212 32 Malmö (SE)
(74) Representative: Aurell, Henrik

(57) **Abstract**

An electronic device is configured to preview video files on a display that displays a media library screen containing a preview image in the form of a thumbnail image for each of plural video files available for viewing using the electronic device. A user input receives user inputs. A controller is configured to control the display of the thumbnail images so that when the user navigates to the media library screen, each video file is represented by an initial thumbnail image being a first representative frame from the corresponding video file and change the thumbnail images to revised thumbnail images in response to a designated user input, such as, inter alia, tilting, rotation or shaking the electronic device. Each revised thumbnail image is a second representative frame from the corresponding video file.

## Description

### TECHNICAL FIELD OF THE INVENTION

The technology of the present disclosure relates generally to electronic devices and, more particularly, to an electronic device that includes a multimedia content function to facilitate improved preview display of video files.

### BACKGROUND

Electronic devices, such as mobile telephones and tablet computers, are capable of taking, storing, previewing and playing video files. A typical way to show the video files that are available for viewing is to display thumbnail images for plural video files on a file management screen (also referred to as a media library screen). It is common that each thumbnail is the first video frame of the corresponding video file as a way to assist the user identify the content of the corresponding video file.

But if two or more video files have similar thumbnails, the user may have difficulty determining the video content of the respective video files. For instance, consider the situation where a first video starts by showing a famous monument, namely the statue of liberty, and continues to show the statue of liberty, and a second video starts by showing the statue of liberty and then pans to show a child attempting to hold the pose of the statue of liberty. In this situation, the first frame of each video would be very similar and would not assist the user in distinguishing subsequent content of the two videos.

Movies stored on DVDs and Blueray disks allow a user to preview the content by showing a representative frame from different scenes in the movie. In some circumstances, each scene may be played simultaneously. This solution, however, does not assist in ascertaining the differences among multiple movies.

Another solution allows the user to select one thumbnail image of a video file and the preview screen will shown a number of images from the video in a bar above the selected thumbnail. But there remains room for improvement in how video file are previewed.

### SUMMARY

To enhance video file previewing on a display of an electronic device, the present disclosure describes techniques for previewing plural video files at once. In response to a designated user input, each thumbnail changes to show a different representative image from the video file.

According to one aspect of the disclosure, an electronic device configured to preview a video file includes a display that displays a preview image in the form of a thumbnail image for a video file available for viewing using the electronic device; a user input that receives user inputs; and a controller, the controller configured to control the display of the thumbnail images so that the video file is represented by an initial thumbnail image being a first representative frame from the video file and change the thumbnail images to a revised thumbnail image in response to a designated user input, wherein the revised thumbnail image is a second representative frame from the video file.

In one embodiment of the electronic device, the first representative frame is a first video frame from the video file.

In one embodiment of the electronic device, the second representative frame is a video frame from the video file at a predetermined location in the video file.

In one embodiment of the electronic device, the predetermined location corresponds to a predetermined percentage of the video file.

In one embodiment of the electronic device, the predetermined location corresponds to a predetermined amount of time into video file.

In one embodiment of the electronic device, the predetermined location corresponds to a predetermined number of frames into the video file.

In one embodiment of the electronic device, at least one of the first representative frame or the second representative frame is selected by the user.

In one embodiment of the electronic device, the designated user input is a predetermined movement of the electronic device.

In one embodiment of the electronic device, the predetermined movement of the electronic device is a tilting of the electronic device.

In one embodiment of the electronic device, the preview image is displayed as part of a media library screen containing preview images in the form of thumbnail images, each thumbnail image corresponding to one of plural video files that are available for viewing using the electronic device, and each of the thumbnail images are changed from a first representative frame from the corresponding video file to a second representative frame from the corresponding video file in response to the designated user input.

According to another aspect of the disclosure, a method of previewing a video file on a display of an electronic device includes displaying a preview image in the form of a thumbnail image for a video file available for viewing using the electronic device; receiving user inputs; and controlling the display of the thumbnail images so that the video file is represented by an initial thumbnail image being a first representative frame from the video file and changing the thumbnail image to a revised thumbnail image in response to a designated user input, wherein the revised thumbnail image is a second representative frame from the video file.

In one embodiment of the method, the first representative frame is a first video frame from the video file.

In one embodiment of the method, the second representative frame is a video frame from the video file at a predetermined location in the video file.

In one embodiment of the method, the predetermined location corresponds to a predetermined percentage of the video file.

In one embodiment of the method, the predetermined location corresponds to a predetermined amount of time into video file.

In one embodiment of the method, the predetermined location corresponds to a predetermined number of frames into the video file.

In one embodiment of the method, at least one of the first representative frame or the second representative frame is selected by the user.

In one embodiment of the method, the designated user input is a predetermined movement of the electronic device.

In one embodiment of the method, the predetermined movement of the electronic device is a tilting of the electronic device.

In one embodiment of the method, the preview image is displayed as part of a media library screen containing preview images in the form of thumbnail images, each thumbnail image corresponding to one of plural video files that are available for viewing using the electronic device, and each of the thumbnail images are changed from a first representative frame from the corresponding video file to a second representative frame from the corresponding video file in response to the designated user input.

### BRIEF DESCRIPTION OF THE DRAWINGS

FIG. 1 is a schematic view of an exemplary electronic device having a multimedia content function and forming part of a communication system.
FIGs. 2 and 3 are schematic representations of screen shots of the electronic device during previewing of video files.
FIG. 4 is a flow diagram of video file preview operations of the multimedia content function of the electronic device.

### DETAILED DESCRIPTION OF EMBODIMENTS

Embodiments will now be described with reference to the drawings, wherein like reference numerals are used to refer to like elements throughout. It will be understood that the figures are not necessarily to scale. Features that are described and/or illustrated with respect to one embodiment may be used in the same way or in a similar way in one or more other embodiments and/or in combination with or instead of the features of the other embodiments.

Described below in conjunction with the appended figures are various embodiments of an electronic device and methods of previewing multimedia content with the electronic device. The electronic device is typically a portable electronic device, and may take any form factor including, but not limited to, a tablet computing device, a mobile telephone, a laptop computer, a gaming device, a camera, a television, and a media player. The illustrated examples show a mobile telephone, but applicability of aspects of the invention is not limited to mobile telephones.

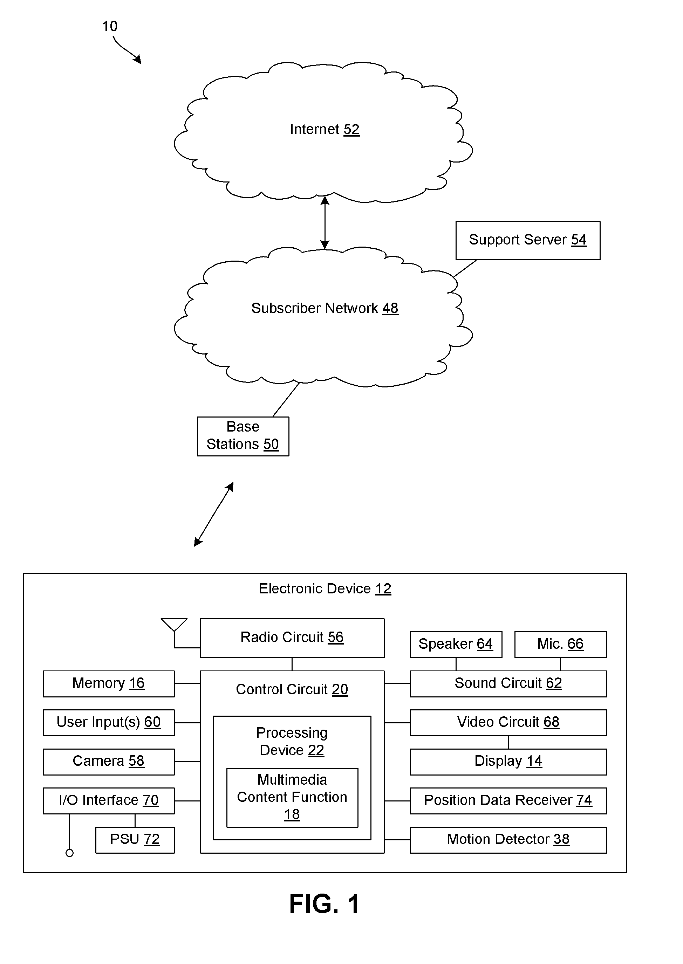

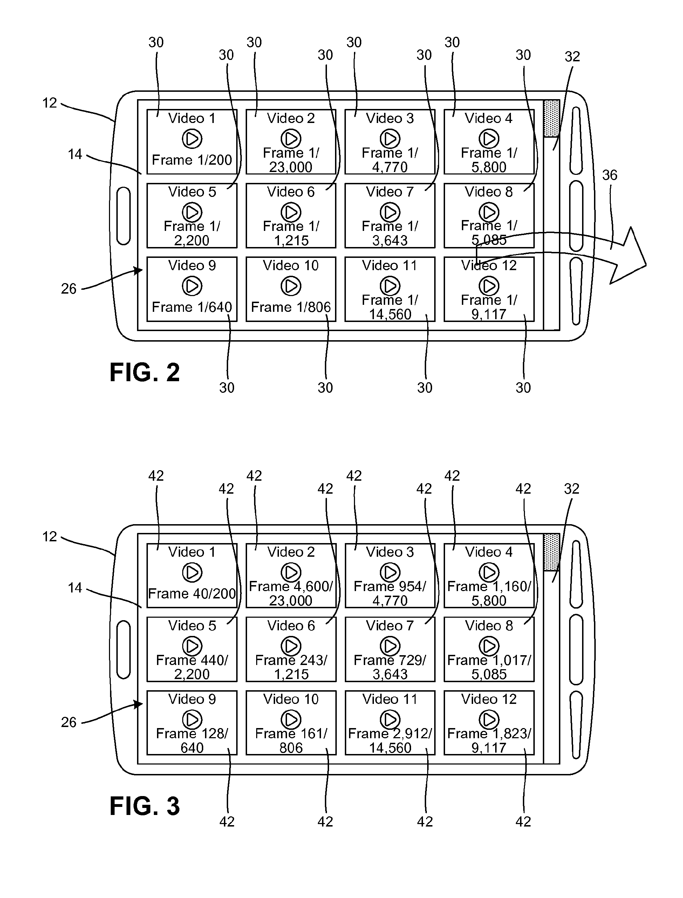

Referring to FIG. 1, schematically shown is a communication system 10 in which an electronic device 12 is present. With additional reference to FIGs. 2 and 3, the electronic device 12 includes a display 14. At times, the display 14 is used to display preview images of files, such as video files that are available for viewing and stored in a memory 16 of the electronic device 12. In other embodiments, the video files are available for viewing on the electronic device 12, but are stored remotely such as on a server that is accessible over the Internet.

In one embodiment, a multimedia content function 18 manages preview operation of the video files. Typically, the multimedia content function 18 is embodied in the form of executable logic (e.g., lines of code, software, or a program) that is stored on a non-transitory computer readable medium (e.g., a memory) of the electronic device 12 and is executed by a control circuit 20. The described operations may be thought of as a method that is carried out by the electronic device 12. Variations to the illustrated and described techniques are possible and, therefore, the disclosed embodiments should not be considered the only manner of carrying out the disclosed functions. Also, while the appended figures show an exemplary visual arrangement of preview thumbnail images for the video files in schematic form, the visual arrangement may be different than that shown. The control circuit 20 is responsible for overall operation of the electronic device 12. For this purpose, the control circuit 20 includes a processor 22 that executes various applications, including the multimedia content function 18.

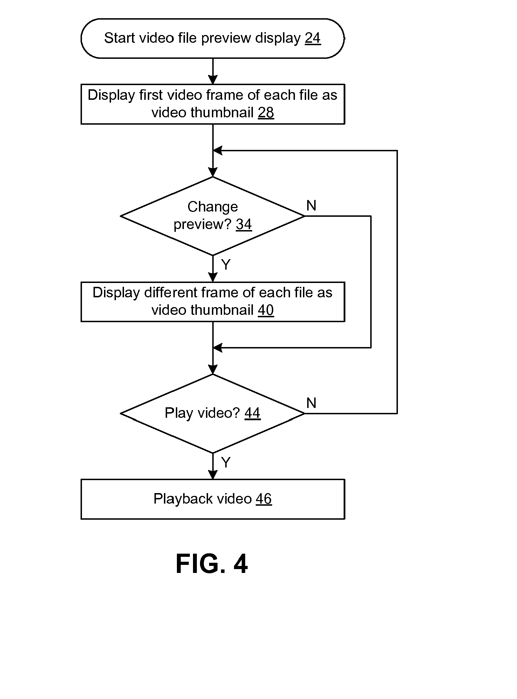

With additional reference to FIG. 4, illustrated is an exemplary flow diagram representing steps that may be carried out to implement video file previewing with the electronic device 12. Although illustrated in a logical progression, the illustrated blocks may be carried out in other orders and/or with concurrence between two or more blocks. Therefore, the illustrated flow diagram may be altered (including omitting steps) and/or may be implemented in an object-oriented manner or in a state-oriented manner.

The logical flow may commence in block 24 where a video preview operation is started. The video preview operation may start by the user navigating through a graphical user interface to a media library screen 26 for video files. The media library screen 26 may exclusively display preview images of video files or may display preview images of video files as well as other types of media (e.g., still photographs, audio files, etc.).

In block 28 of the flow diagram, a preview image (FIG. 2) for each of plural video files is displayed. Each preview image is a thumbnail image 30 (or referred to simply as thumbnail 30) and corresponds to an associated video file. The thumbnails 30 in the illustrated embodiment are arranged in a matrix. In the illustrated embodiment, the displayed matrix of thumbnails 30 includes twelve thumbnails corresponding to twelve video files, labeled in the figures as videos 1 through 12. A scrolling or other graphical user interface feature 32 may be used to display thumbnails for different video files.

The preview operations described below are described in a context where the operations are simultaneously applied to each of the displayed thumbnails 30. It will be understood that the operations may be applied to a single thumbnail, such as a video file that has been selected by the user or in circumstances where only one thumbnail is displayed.

When the preview images (thumbnails 30) are initially displayed, each thumbnail 30 is the first video frame from the corresponding video file. In other embodiments, another image may be used as the initial preview image. Alternatives to the first video frame from the video file include, but are not limited to, a user selected image or frame, a predetermined video frame (e.g., the tenth video frame or the hundredth video frame from the video file), a composite of plural predetermined video frames, etc.

Following block 28, a determination is made in block 34 as to whether the user has made an input action to change the displayed thumbnails 30. In one embodiment, the input action is movement of the electronic device 12 in a predetermined manner, such as tilting the electronic device 12 to the right (e.g., tilting the right-side edge of the display 14 away from the user) as represented by arrow 36. Movement of the electronic device 12 may be detected with one or more motion detectors 38, such as accelerometers, gyros, etc. Other movements to invoke change of the thumbnails 30 are possible, such as clockwise or counter-clockwise rotation of the electronic device 12, lateral translation (e.g., sliding) of the electronic device 12, shaking of the electronic device 12, etc.

If an input action to change the displayed thumbnails 30 is detected, the logical flow may proceed to block 40. In block 40, the image constituting the thumbnail 30 is changed from the initial image of block 28 to another image, or revised thumbnail 42 (FIG. 3). The image used as the revised thumbnail 42 is ascertained in predetermined manner. In one embodiment, the image for the revised thumbnail 42 is a video frame from the corresponding video file located a predetermined location in the video file. An exemplary predetermined location is a certain percentage of the video file, such as ten percent, twenty percent, etc. For instance, in the illustrated embodiment, the revised thumbnail is the video frame located twenty percent into the corresponding video file. Thus, if the video file has 200 frames (e.g., video 1 in the figures), the revised thumbnail 42 is the 40th frame of the video file. Similarly, under this exemplary embodiment, if the video file has 23,000 frames (e.g., video 2 in the figures), the revised thumbnail 42 is the 4,600th frame of the video file.

Other manners of determining the revised thumbnail are possible. For instance, the revised thumbnail 42 may be based on time, such as the frame located at a predetermined number of seconds (e.g., two second, five seconds, ten seconds, etc.) into the video file. As another example, the revised thumbnail 42 may be based on a predetermined number of frames, such as the frame located 100 frames into the video file, 200 frames into the video file, 500 frames into the video file, etc. As another example, the revised thumbnail 42 may be based on predetermined video parameter, such as the first frame of a next chapter in the video file, the first frame where there is a change to background encoding, or a frame designated by the user.

The user may make repeated input actions to change the displayed thumbnails. In this case, for each repeated movement, the displayed thumbnail will be changed. For example, for each tilting of the electronic device 12 to the right, the thumbnail may be changed to be a frame located further into the video. Following the example shown in the figures, if the user tilts the electronic device 12 to the right once, the thumbnail 30 is changed from the first frame of the video file to the frame twenty percent into the video file as the revised thumbnail 42 and, if the user tilts the electronic device 12 to the right once more (a second tilting) the preview image will change to the frame another twenty percent into the video file (e.g., the frame 40 percent into the video file). These changes to the preview image will be referred to as jumping forward in the video file to establish the preview image.

The user also may make input actions to reverse or jump backward in the video file to establish the preview image. For example, if the user tilts the electronic device 12 to the left (e.g., move the left-hand side of the display 14 away from the user), the preview image will change from a current preview image to a frame in the video file that is located earlier than the current preview image. Following the illustrated example, if the current preview image is the frame 60 percent into the video file and the user tilts the electronic device 12 to the left, the preview image will change to the frame located 40 percent into the video file.

The preview image will continue to change in response to various input actions from the user. In one embodiment, the rate of change of the preview images is commensurate with the speed with which the input actions are made (e.g., fast repeated tilting of the electronic device will make the preview images change faster than if the electronic device 12 were tilted slowly). The change to the preview image also may be based on the degree of user input action and/or how long the user maintains the input action. For example, if the user tilts the electronic device 12 a relatively small amount (e.g., 5 degree rotation about a central axis) the preview image may be from a relatively early location in the video file (e.g., the frame 10 percent into the video file) and if the user tilts the electronic device 12 a relatively large amount (e.g., 15 degree rotation about a central axis) the preview image may be from a later location in the video file (e.g., the frame 30 percent into the video file). Holding the electronic device 12 in the tilted position may cause the preview image to automatically jump through a series of frames from the video file.

The inputs to change the preview images for the video files described thus far have been movement-based. The input need not be movement-based. Other types of exemplary inputs include interaction with touch-screen functionality, interaction with buttons or keys, or voice input.

Following block 40 or following a negative determination in block 34, the logical flow may proceed to block 44. A determination may be made in block 44 as to whether the user makes an input action to play a selected one of the video files. In one embodiment, a video file may be selected for playback by touching the preview image corresponding to the image file. If the user makes an input to playback a video file, the video file is played back in block 46. Otherwise, the logical flow may return to block 34. At any time in the logical flow, the logical flow may terminate if the user navigates away from the media library screen 26.

Returning to FIG. 1, other aspects of the electronic device 12 will be described. In one embodiment, the electronic device 12 is configured to engage in wireless communications, such as voice calls, video calls, data transfers, and the like. Data transfers may include, but are not limited to, receiving streaming content, receiving data feeds, downloading and/or uploading data (including Internet content, video files, etc.), receiving or sending messages (e.g., chat-style messages, electronic mail messages, multimedia messages), and so forth. In one embodiment, the electronic device 12 communicates with a subscriber network 48 through an access point (e.g., WiFi access point) or a base station 50 (e.g., cellular telephone tower). Internet 52 access may be attained via the subscriber network 48. The scriber network 48 may include a support server 54 for managing calls placed by and destined to the electronic device 12, transmitting data to and receiving data from the electronic device 12, and carrying out other support functions.

The electronic device 12 includes communications circuitry that enables the electronic device 12 to establish communication connections. In the exemplary embodiment, the communications circuitry includes a radio circuit 56. The radio circuit 56 includes one or more radio frequency transceivers and an antenna assembly (or assemblies). Since the electronic device 12 is capable of communicating using more than one standard, the radio circuit 56 represents each radio transceiver and antenna needed for the various supported connection types. The radio circuit 56 further represents any radio transceivers and antennas used for local wireless communications directly with another electronic device, such as over a Bluetooth interface.

The previewed video files described above may be obtained by wireless communication. Instead of obtaining video files in this manner or in addition to obtaining video files in this manner, the video files may be captured with a camera 58 of the electronic device 12. The camera 58 may be configured to capture both video and still images. Video and still images captured by the camera 58 may be stored in the memory 16.

As indicated, the electronic device 12 includes user inputs 60 for controlling operation of the electronic device 12. Exemplary user inputs 60 include, but are not limited to, a touch input that overlays the display 14 for touch screen functionality, one or more buttons, and so forth. Also, the motion detectors 38 (e.g., gyro sensors, accelerometers, etc.) may be used as a user input.

As indicated, the electronic device 12 includes the primary control circuit 20 that is configured to carry out overall control of the functions and operations of the electronic device 12. The processor 22 of the control circuit 32 may be a central processing unit (CPU), microcontroller or microprocessor. The processor 22 executes code stored in a memory (not shown) within the control circuit 20 and/or in a separate memory, such as the memory 16, in order to carry out operation of the electronic device 12. The memory 16 may be, for example, one or more of a buffer, a flash memory, a hard drive, a removable media, a volatile memory, a non-volatile memory, a random access memory (RAM), or other suitable device. In a typical arrangement, the memory 16 includes a non-volatile memory for long term data storage and a volatile memory that functions as system memory for the control circuit 20. The memory 16 may exchange data with the control circuit 20 over a data bus. Accompanying control lines and an address bus between the memory 16 and the control circuit 20 also may be present. The memory 16 is considered a non-transitory computer readable medium.

The electronic device 12 may further include a sound circuit 62 for processing audio signals. Coupled to the sound circuit 62 are a speaker 64 and a microphone 66 that enable a user to carry out telephone conversations using the electronic device 12, and hear sounds generated in connection with other functions of the device 12. The sound circuit 62 may include any appropriate buffers, encoders, decoders, amplifiers and so forth.

The display 14 may be coupled to the control circuit 20 by a video circuit 68 that converts video data to a video signal used to drive the display 14. The video circuit 68 may include any appropriate buffers, decoders, video data processors and so forth.

The electronic device 12 may further include one or more input/output (I/O) interface(s) 70. The I/O interface(s) 70 may be in the form of typical electronic device I/O interfaces and may include one or more electrical connectors for operatively connecting the electronic device 12 to another device (e.g., a computer) or an accessory (e.g., a personal handsfree (PHF) device) via a cable. Further, operating power may be received over the I/O interface(s) 70 and power to charge a battery of a power supply unit (PSU) 72 within the electronic device 12 may be received over the I/O interface(s) 70. The PSU 72 may supply power to operate the electronic device 12 in the absence of an external power source.

The electronic device 12 also may include various other components. For instance, a position data receiver 74, such as a global positioning system (GPS) receiver, may be present to assist in determining the location of the electronic device 12.

Although certain embodiments have been shown and described, it is understood that equivalents and modifications falling within the scope of the appended claims will occur to others who are skilled in the art upon the reading and understanding of this specification.

## Claims

1. An electronic device configured to preview a video file, comprising:
a memory that stores a plurality of video files that are available for viewing using the electronic device;
a display that displays a media library screen containing preview images in the form of thumbnail images, each thumbnail image corresponding to one of the plural video files;
a user input that receives user inputs; and
a controller, the controller configured to control the display of each thumbnail image so that each video file is represented by an initial thumbnail image being a respective first representative frame from the video file and change each thumbnail image to a revised thumbnail image in response to a designated user input, wherein the revised thumbnail image is a respective second representative frame from the video file.

2. The electronic device of claim 1, wherein each first representative frame is a respective first video frame from the video file.

3. The electronic device of claims 1 or 2, wherein each second representative frame is a video frame from the respective video file at a predetermined location in the video file.

4. The electronic device of claim 3, wherein the predetermined location corresponds to a predetermined percentage of the video file.

5. The electronic device of claim 3, wherein the predetermined location corresponds to a predetermined amount of time into video file.

6. The electronic device of claim 3, wherein the predetermined location corresponds to a predetermined number of frames into the video file.

7. The electronic device of claim 1, wherein at least one of the first representative frame or the second representative frame is selected by the user.

8. The electronic device of claim 1, wherein the designated user input is a predetermined movement of the electronic device.

9. The electronic device of claim 7, wherein the predetermined movement of the electronic device is a tilting of the electronic device.

10. A method of previewing a video file on a display of an electronic device, comprising:
storing a plurality of video files that are available for viewing using the electronic device in a memory of the electronic device;
displaying a media library screen on the display, the media library screen containing preview images in the form of thumbnail images, each thumbnail image corresponding to one of the plural video files;
receiving user inputs with a user input of the electronic device; and
controlling the display of each thumbnail image so that each video file is represented by an initial thumbnail image being a respective first representative frame from the video file and changing each thumbnail image to a revised thumbnail image in response to a designated user input, wherein the revised thumbnail image is a respective second representative frame from the video file.

11. The method of claim 10, wherein each first representative frame is a respective first video frame from the video file.

12. The method of claims 10 or 11, wherein each second representative frame is a video frame from the respective video file at a predetermined location in the video file.

13. The method of claim 12, wherein the predetermined location corresponds to one of a predetermined percentage of the video file, a predetermined amount of time into video file, or a predetermined number of frames into the video file.

14. The method of claim 10, wherein the designated user input is a predetermined movement of the electronic device.

15. The method of claim 14, wherein the predetermined movement of the electronic device is a tilting of the electronic device.
